(19) Europäisches Patentamt
European Patent Office
Office européen des brevets

(11) Publication number: 0 028 469
B1

(12) # EUROPEAN PATENT SPECIFICATION

(45) Date of publication of patent specification: 02.11.83

(51) Int. Cl.³: C 09 D 3/80, C 09 D 3/64

(21) Application number: 80303622.7

(22) Date of filing: 14.10.80

(54) **Aqueous thermosetting coating compositions containing a water-soluble hydroxy-amido compound**

(30) Priority: 22.10.79 GB 7936556
16.05.80 GB 8016371

(43) Date of publication of application:
13.05.81 Bulletin 81/19

(45) Publication of the grant of the patent:
02.11.83 Bulletin 83/44

(84) Designated Contracting States:
AT BE DE FR GB IT LU NL SE

(56) References cited:
FR - A - 2 316 303
GB - A - 1 070 793
GB - A - 1 489 485

(73) Proprietor: IMPERIAL CHEMICAL INDUSTRIES PLC
Imperial Chemical House Millbank
London SW1P 3JF (GB)

(72) Inventor: Bromley, Charles
10, Elms Drive, Bourne End
Buckinghamshire (GB)
Inventor: Thompson, Morice William
"Urishay" Highfield Lane
Cox Green Maidenhead Berkshire (GB)

(74) Representative: Wood, Dennis John Cecil, et al
Imperial Chemical Industries PLC
Legal Department: Patents
Thames House North Millbank
London SW1P 4QG (GB)

EP 0 028 469 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Aqueous thermosetting coating compositions containing a water-soluble hydroxy-amido compound

This invention relates to water-borne coating compositions of the thermosetting type, in particular to such compositions having a high content of film-forming material which includes certain β-hydroxyalkylamides as reactive constituents thereof.

It has already been proposed, for example in British Patent Specification No. 1,489,485, to utilise β-hydroxyalkylamides as crosslinking agents for carboxyl group-containing film-forming polymers. The agents in question have the advantage that they rapidly react with carboxyl groups, in either the free acid form or the salt form, merely with the application of heat and without the need for any catalyst. They are soluble in a wide range of solvents including water, their water-solubility being of particular interest since it enables the crosslinking of carboxylic polymers to be carried out in wholly aqueous media, thus enabling entirely non-polluting compositions to be formulated. In view of these properties, the β-hydroxyalkylamides have been suggested as total replacements for the amino resins, e.g. melamine-formaldehyde condensates, which are commonly used as crosslinking agents in thermosetting coating compositions, particular emphasis being placed on the fact than no formaldehyde is liberated during the crosslinking reaction with β-hydroxyalkylamides.

We have now found, however, that β-hydroxyalkylamides are valuable constituents of water-borne thermosetting coating compositions, not in the role of crosslinking agents but as means of increasing the film-forming solids content of such a composition without incurring the penalty of higher viscosity, and also of improving the properties of a coating film obtained from it. In the compositions which are the subject of the present invention, crosslinking of the film-forming material is effected in the conventional fashion using an amino resin. It is not essential that the main film-forming polymer should contain carboxyl groups; it may, for example, contain only hydroxyl groups, which are nevertheless crosslinkable by the amino resin. The β-hydroxyalkylamide functions in this context as a constituent of low molecular weight (and hence low viscosity contribution to the composition as a whole) but of high functionality, which becomes chemically incorporated into the cured coating film by reaction with the amino resin, and additionally by reaction with the main film-forming polymer in the case that the latter does contain carboxyl groups.

According to the present invention, therefore, there is provided a thermosetting coating composition comprising

(A) a crosslinkable film-forming polymer;

(B) an aqueous medium in which the polymer is dissolved or stably dispersed;

(C) a hydroxyamido compound which is soluble in the aqueous medium and which has the general formula

(I) 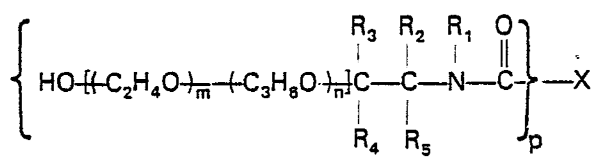

wherein,

m and n are independently zero or an integer from 1 to 10;

$R_1$ is H, a $C_1$—$C_5$ alkyl group or a $C_1$—$C_5$ hydroxyalkyl group;

$R_2$ and $R_3$ are either separately H or a $C_1$—$C_5$ alkyl group or together form part of a cycloalkylene or alkyl-substituted cycloalkylene group linking the hydroxyl group and the nitrogen atom;

$R_4$ and $R_5$ are each H or a $C_1$—$C_5$ alkyl group;

p is an integer from 1 to 4; and

X is hydrogen or a radical of valency p selected from saturated hydrocarbon chains containing from 1 to 10 carbon atoms, aromatic nuclei and radicals of the formula

$$—O—(C_2H_4O)_q—(C_3H_6O)_r$$

in which q and r are independently zero or integers from 1 to 6, provided that q and r are not both zero and that (q + r) is not greater than 6, and further provided that, where p is 1, $R_1$ is a group of the formula

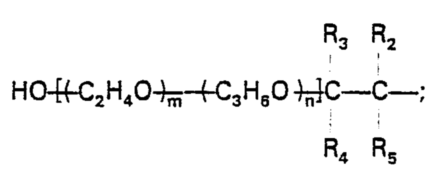

(D) an amino resin crosslinking agent for the film-forming polymer which is compatible with the constituents (A) and (C).

A variety of known types of film-forming polymer may be used as the constituent A of the coating compositions of the invention. For example, the polymer may be of the acrylic type, that is to say one derived predominantly from one or more alkyl esters of acrylic acid or methacrylic acid, optionally together with other ethylenicallyl unsaturated monomers. Suitable acrylic esters include methyl methacrylate, ethyl methacrylate, propyl methacrylate, butyl methacrylate, ethyl acrylate, butyl acrylate and 2-ethylhexyl acrylate. Suitable other, copolymerisable monomers include vinyl acetate, vinyl propionate, acrylonitrile, styrene and vinyl toluene.

Since the acrylic polymer is required to be of the thermosetting, cross-linking type, the monomers used will include one or more carrying reactive functional groups. Suitable functional monomers include, for example, acrylic acid, methacrylicx acid, hydroxyethyl acrylate, hydroxyethyl methacrylate, 2-hydroxypropyl acrylate, 2-hydroxypropyl methacrylate, N-(alkoxymethyl) acrylamides and N-(alkoxymethyl) methacrylamides, where the alkoxy group may be, for example, a butoxy group, glycidyl acrylate and glycidyl methacrylate. In the case where the acrylic polymer is required to be soluble in the aqueous medium of the composition, this may be achieved by including further, in the monomers from which the polymer is derived, a monomer containing basic groups, for example dimethylaminoethyl methacrylate or diethylaminoethyl methacrylate, these groups subsequently being converted to salt groups by reaction with a suitable acid, for example lactic acid, dissolved in the aqueous medium. Alternatively, the acrylic polymer may be rendered water-soluble by neutralisation of some of the carboxyl groups which it contains as a result of the use of acrylic acid or methacrylic acid as comonomers, as mentioned above; the neutralisation is effected by means of a base, such as dimethylaminoethanol, dissolved in the aqueous medium. Such acrylic polymers may be obtained by well known procedures such as free radical-initiated bulk polymerisation or solution polymerisation of the appropriate monomers.

It may be desired that the acrylic film-forming polymer should be in a state of stable dispersion in the aqueous medium instead of being dissolved therein; by "stable" we mean that the particles of the polymer disperse phase should be stable towards gross flocculation, in other words, that the dispersion, even at low solids contents, should contain few if any multi-particle aggregates, although it may exhibit a slight degree of particle flocculation especially at higher solids contents. This state of stable dispersion may be achieved, dor example by steric stabilisation, that is to say by the provision around the polymer particles of a barrier of chains of a different polymer which are solvated by the aqueous medium of the composition and hence exist in a chain-extended configuration. In this context, the term "solvated" implies that the polymer chains in question, if they were independent molecules, would be actually soluble in the said aqueous medium; however, because the chains are in fact attached to the polymer particles at one or more points along their length, the steric barrier remains permanently attached to the particles. Acrylic polymer particles which are sterically stabilised in this way may conveniently be produced by a process of dispersion polymerisation of the appropriate monomers in the aqueous medium, in the presence of a suitable steric stabiliser. The stabiliser is amphipathic in nature, that is to say it contains in the molecule two essential polymeric components of differing characteristics: one component is a polymer chain which is solvated by the aqueous medium, and the other component is a polymer which is not solvated by that medium and in consequence anchors itself to the polymer particles. Suitable dispersion polymerisation processes are described in our British Patent Application No. 7940088 (GB—A 2039497). The aqueous medium in which the polymerisation is carried out consists of water admixed with a volatile organic co-solvent, the mixture as a whole being capable of dissolving the monomers, most or all of which would be substantially insoluble in water alone. These procedures involve the additional requirement that the polymerisation be conducted at a temperature which is at least 10°C higher than the glass transition temperature of the polymer which is to be formed, and in such a manner that at no time is there present a separate monomer phase. The amphipathic steric stabiliser may be added to the polymerisation mixture as a pre-formed substance, or it may be formed *in situ* during the polymerisation from a polymer which is soluble in the aqueous medium and is able to copolymerise with, or, through hydrogen abstraction, to undergo grafting by, some of the monomer being polymerised. The sterically stabilised polymer particle dispersions which are obtained by these procedures are very suitable for the formulation of compositions to be used in accordance with the present invention, since it is possible to remove the organic co-solvent from them by distillation without impairing the stability of the disperse phase, yielding a product in which the continuous phase consists solely of water.

Alternatively, a dispersion of acrylic polymer may be obtained by the aqueous emulsion polymerisation of the appropriate monomers, in which case the stability of the polymer particles towards gross flocculation is conferred by the presence on the particles of electrically charged species derived from a water-soluble, ionisable surfactant and/or a water-soluble, ionisable polymerisation initiator. Such polymerisation processes are extensively described in the literature.

Instead of being an acrylic polymer the film-forming polymer A may be of the polyester type, that is to say one which is essentially the product of condensation of one or more polyhydric alcohols and one or more polycarboxylic acids. We include in this term the alkyd resins which are obtained from such starting materials with the addition of constituents supplying residues of fatty acids derived from natural drying oils, or semi-drying oils, or even oils having no air-drying capabilities. We also include

polyester resins not incorporating any natural oil residues. All these resins normally contain a proportion of free hydroxyl and/or carboxyl groups which are available for reaction with an amino resin cross-linking agent.

Suitable polyhydric alcohols for the production of polyester resins include ethylene glycol, propylene glycol, butylene glycol 1:6-hexylene glycol, neopentyl glycol, diethylene glycol, triethylene glycol, tetraethylene glycol, glycerol, trimethylolpropane, trimethylethane, pentaerythritol, dipentaerythritol, tripentaerythritol, hexane triol, oligomers of styrene and allyl alcohol (for example that sold by Monsanto Chemical Company under the designation RJ 100) and the condensation products of trimethylolpropane with ethylene oxide or propylene oxide (such as the products known commercially as "Niax" triols). Suitable polycarboxylic acids include succinic acid (or its anhydride), adipic acid, azelaic acid, sebacic acid, maleic acid (or its anhydride), fumaric acid, muconic acid, itaconic acid, phthalic acid (or its anhydride), isophthalic acid, terephthalic acid, trimellitic acid (or its anhydride) and pyromellitic acid (or its anhydride). Where it is desired to produce air-drying alkyd resins, suitable drying oil fatty acids which may be used include those derived from linseed oil, soya bean oil, tall oil, dehydrated castor oil, fish oils or tung oil. Other oil fatty acids, of semi-drying or non-drying types, which may be used include those derived from safflower oil, sunflower oil and cottonseed oil. Normally it is preferred that the oil length of such an alkyd resin should not exceed 50%. Monofunctional saturated carboxyl acids may also be incorporated in order to confer plasticity on the polyester. Such acids may be, for example, $C_4$—$C_{20}$ saturated aliphatic acids, benzoic acid, p-tertbutyl benzoic acid and abietic acid. In addition, monofunctional hydroxy compounds may be incorporated in order to control the chain length of the polyester or to confer certain desirable compatibility properties upon it; suitable monohydroxy compounds include benzylalcohol, cyclohexyl alcohol, saturated or unsaturated fatty alcohols and condensation products of ethylene oxide or propylene oxide with monofunctional alcohols (e.g. the methoxy-polyethylene glycol obtained by reaction of ethylene oxide with methanol).

Suitable film-forming polyester resins also include "modified" alkyd resins, for exmaple styrenated or methacrylated alkyds, urethane alkyds and epoxy alkyds. Water-solubility of a polyester or alkyd resin may be achieved by arranging for it to contain unesterified carboxyl groups which are then neutralised by a base dissolved in the aqueous medium, as described above in connection with the acrylic polymers. Such polyesters or alkyd resins may be made by any of the known condensation polymerisation techniques, such as melt polymerisation or polymerisation in the presence of a water-entraining solvent, optionally with the aid of a catalyst for the condensation reaction.

The aqueous medium B, in which the film-forming polymer is dissolved or dispersed, may be either water alone or water in admixture with a water-miscible organic liquid such as methanol, 2-ethoxyethanol or 2-butoxyethanol; the aqueous medium may also contain water-soluble substances introduced for the purpose of adjusting the pH of the composition, in particular for neutralising basic or acidic groups in the polymer in order to render it water-soluble, as discussed above.

The hydroxyamido compounds C, having the formula I indicated above, are in general obtainable by the reaction of a carboxylic ester with the corredponding hydroxyalkylamine, optionally followed by condensation of the resulting $\beta$-hydroxyalkylamido compound with ethylene oxide and/or propylene oxide. Examples of hydroxyamido compounds represented by the formula I where X is hydrogen include N,N-bis($\beta$-hydroxyethyl formamide and N,N-bis($\beta$-hydroxyethyl) acetamide. These may readily be obtained by reaction of formic acid or acetic acid and respectively with diethanolamine. Other examples of compounds represented by formula I are the $\beta$-hydroxyalkylamido compounds having the formula:—

$$(HOCH_2.CHR_2)_2—N.CO.Y.CO.N—(CHR_2.CH_2OH)_2 \qquad (II)$$

where $R_2$ is hydrogen or methyl and Y is a divalent saturated hydrocarbon chain containing from 1 to 10 carbon atoms, or a benzene nucleus. The compounds of the formula II are readily obtained by reaction of a lower alkyl diester, e.g. the dimethyl ester, of the appropriate aliphatic dicarboxylic acid or benzene dicarboxylic acid with diethanolamine or diisopropanolamine. Examples of these compounds include N,N,N'N'-tetrakis-($\beta$-hydroxyethyl) adipamide, N,N,N',N'-tetrakis-($\beta$-hydroxyisopropyl) adipamide, N,N,N',N'-tetrakis-($\beta$-hydroxyethyl) azelamide, N,N,N',N'-tetrakis-($\beta$-hydroxyisopropyl)azelamide, N,N,N',N'-tetrakis-($\beta$-hydroxyethyl)phthalamide, N,N,N',N'-tetrakis-($\beta$-hydroxyethyl)terephthalamide and N,N,N',N'-tetrakis-($\beta$-hydroxyisopropyl)terephthalamide.

$\beta$-Hydroxyalkylamido compunds of the formula I where X is a radical of the formula

$$—O—(C_2H_4O)_q—(C_3H_6O)_r—$$

may be obtained, for example, by condensation of the appropriate alkylene glycol, e.g. ethylene glycol, tetramethylene glycol or dipropylene glycol with ethyl $\beta$-bromopropionate followed by reaction of the resulting diester with diethanolamine or diisopropanolamine.

Any of the compounds mentioned above containing $\beta$-hydroxyalkylamido groups may subsequently be condensed with ethylene oxide and/or propylene oxide to give hydroxyl group-containing derivatives which are also useful as constituents of the compositions of the invention. Preferably there are condensed from 0 to 10 moles each of ethylene oxide and/or propylene oxide per

mole of the β-hydroxyalkylamide, that is to say the sum of m and n in formula I is from 0 to 20. The relative proportions of ethylene oxide and propylene oxide used may be varied considerably, but in general it is desirable that ethylene oxide should predominate in order to promote solubility of the resulting condensate in the aqueous medium.

Certain of the β-hydroxyalkylamido compounds and alkylene oxide condensates thereof may be soluble in water alone, e.g. N,N,N',N'-tetrakis-(β-hydroxyethyl)adipamide is readily water-soluble; with other such compounds, it may be desirable for the aqueous medium to include a proportion of one of the water-miscible organic solvents previously mentioned.

The proportion to be used in the compositions of the invention of the hydroxyamido compound C will vary somewhat according to the nature of the main film-forming polymer and on the identity of the compound itself. In certain cases, the advantages of enhancement of the solids content of the composition and of certain physical properties of the coating film obtained from it (as discussed in more detail below), resulting from the inclusion of the compound in question, may be offset to some extent by the development of brittleness in the film, so that a compromise is necessary. The tendency to impart brittleness is rather less with the wholly aliphatic hydroxyamido compounds than it is with the compounds derived from aromatic amides, and it is also rather less with the β-hydroxyisopropyl derivatives than it is with the corresponding β-hydroxyethyl compounds. As general guidance, it can be stated that, where the main film-forming polymer is a latex-type acrylic polymer, a proportion of the hydroxyamido compound in the range 1% to 20%, preferably around 5%, based on the total weight of the polymer (A) and the crosslinking agent (D), is satisfactory; where the film-forming polymer is a water-soluble alkyd resin, rather higher proportions, in the range 1% to 40%, preferably from 15% to 20%, on the same basis, of the hydroxyamido compound may be used with overall advantage. In any particular case, however, the suitability of a particular hydroxyamido compound and the optimum proportions of it to be used can readily be established by simple experimentation.

Amino resins suitable for use in the compositions of the invention are any of those which are well known for use in thermosetting coating composition, that is to say condensates of formaldehyde with nitrogenous compounds such as urea, thiourea, melamine or benzoguanamine, or lower alkyl ethers of such condensates in which the alkyl group contains from 1 to 4 carbon atoms, provided that such condensates or ethers thereof have an adequate solubility in the aqueous medium of the composition. As in the case of the hydroxyamido compounds mentioned above, the presence of a proportion of a water-miscible organic solvent in the aqueous medium may assist the dissolution of an amino resin which is not readily soluble in water alone.

The proportion of the amino resin D to be used in the compositions will vary with the nature of the film-forming polymer A, e.g. with its molecular weight and functionality in terms of crosslinkable groups; it will also vary with the particular hydroxyamido compound C which is used, more especially with its hydroxyl functionality. The optimum proportion can readily be found by simple experiment, but in most instances the proportion of amino resin will lie in the range 5—40% by weight of the total film-forming material present in the composition.

They may also be incorporated in the compositions of the invention, in addition to the constituents already described, other low molecular weight (i.e. non-polymeric) compounds which bear functional groups that can react with the amino resin and which can thereby become bound up into the cured film. Examples of such compounds are diols of low volatility such as 2-ethyl-1,3-hexandiol, low molecular weight polypropylene glycols and low molecular weight adducts of ethylene oxide with dihydric or trihydric alcohols such as neopentyl glycol, bisphenol A, cyclohexanedimethanol, glycerol or trimethylolpropane. Suitable proportions of these compounds are again readily established by simple experiment but will usually lie in the range 5—40% by weight of the total film-forming material in the composition.

Coating compositions according to the invention possess advantages in a number of respects over known water-borne thermosetting compositions. Firstly, as already indicated, the incorporation in them of the low molecular weight but highly functional β-hydroxyalkylamide derivative enables the total film-forming solids content of such a composition to be raised significantly without the viscosity increasing at the same time to a level at which application difficulties are encountered, as is the case if the proportion of main film-forming polymer is raised. Thus, by means of the invention, solids contents in the range 60% to 90% by weight can readily be achieved, as compared with contents in the range 30% to 60% approximately which are the highest normally achieved according to the prior art. Secondly, the incorporation of the β-hydroxyalkylamide confers a valuable improvement in the hardness of films derived from the compositions and also in the adhesion of such films to a metal substrate, so that an overall enhancement of the impact resistance of coatings is observed. Thirdly, the compositions give films showing improved humidity and water-soak resistance and also improved salt-spray resistance.

The invention is illustrated but not limited by the following Examples, in which parts, ratios and percentages are by weight.

*Preparation A*

N,N,N',N'-Tetrakis(β-hydroxyethyl)adipamide

A mixture of 620 parts (stoichiometric excess) of diethanolamine, and 30 parts of methanol in which 1.5 part of sodium had been dissolved was charged to a flask fitted with stirrer, thermometer, condenser and nitrogen inlet. The charge was heated to 90°C and the methanol removed under partial vacuum. There was then fed into the flask over a period of 2 hours 348 parts of dimethyl adipate, the temperature rising to a maximum of 110°C due to the exothermic reaction. Heating was continued for 1½ hours more, at which stage the degree of conversion of the ester, estimated by titrating the reaction mixture with N/10 HCl using bromocresol green indicator, was 85—90%. On cooling, there separated from the mixture a waxy, white solid. This was purified by heating briefly in methanol, cooling the solution in ice, filtering and washing the crystalline product with cold methanol. The final yield of N,N,N',N'-tetrakis(β-hydroxyethyl)adipamide, m.p. 125—126°C, was 80—85% of theoretical.

*Preparation B*

N,N,N',N'-Tetrakis(β-hydroxyisopropyl)adipamide

The procedure of Preparation A was repeated, but replacing the diethanolamine by 266 parts of diisopropylamine and using 164 parts of dimethyl adipate. Titration indicated a conversion of the ester of 74.6% and the product was a viscous liquid. This was purified by passing a dilute solution of it in methanol through an $H^+$ ion-exchange column; The methanol was removed by evaporation and the adipamide was finally obtained as a clear light brown, viscous liquid.

*Preparation C*

N,N,N',N'-Tetrakis(β-hydroxyethyl)terephthalamide

The general procedure of Preparation A was followed, using 260 parts of diethanolamine, 140 parts of dimethylterephthalate, and 0.5 part of sodium dissolved in 15 parts of methanol. The product was a white solid which was recrystallised from hot water to give a material of m.p. 176°C in 85—90% yield. The identity of the product was conformed by NMR analysis.

*Preparation D*

N,N,N',N'-Tetrakis(β-hydroxyethyl)azelamide

The general procedure of Preparation A was repeated, using 178 parts of diethanolamine, 122 parts of dimethylazelate and a solution of 0.5 part of sodium in 15 parts of methanol. The addition of the ester to the amine was carried out at 70°C over a period of 2 hours, followed by continued heating for 2 hours more under a partial vacuum. Titration of the reaction mixture then showed a conversion of the ester of 84—85%. The product was diluted with methanol and freed from unreacted amine by being passed through an $H^+$ ion-exchange column. Methanol was subsequently removed under vacuum to yield a pale yellow, viscous liquid.

## Example 1

Use of β-hydroxyalkylamides in coil finishes

(1) *Preparation of Polymer Latex*

A latex was prepared of a copolymer having the composition methyl methacrylate/butyl acrylate/hydroxypropyl methacrylate/N-butoxymethylacrylamide/methacrylic acid 48/39.5/5/5/2.5, the latex having a non-volatile content of 51%. The latex was prepared as follows:—

To a 2-litre flask fitted with stirrer, thermometer, inert gas inlet and reflux condenser with provision for feeding ingredients into the returning distillate, there was charged:

*Charge A*

| | |
|---|---|
| Distilled water | 315 parts |
| Methanol | 500 parts |

There was then added the following mixture:

*Charge B*

| | |
|---|---|
| Methyl methacrylate | 27 parts |
| Butyl acrylate | 23 parts |
| Methacrylate of methoxypolyethylene glycol, mol. wt. 2000, (92.5% non-vol.) | 19 parts |
| Azodiisobutyronitrile | 1.0 part |

The contents of the flask were heated to reflux temperature (73°C) for 30 minutes to form a seed dispersion of polymer. There was then commenced the dropwise feed into the returning distillate of the following mixture:

*Charge C*

| | |
|---|---|
| Methyl methacrylate | 198 parts |
| Butyl acrylate | 163 parts |
| N-Butoxymethyl acrylamide (60% solution in 3:1 butanol:xylene | 34 parts |
| Methacrylate of methoxypolyethylene glycol, mol.wt. 2000, (92.5% non-vol.) | 16 parts |
| Hydroxypropyl methacrylate | 20.6 parts |
| Azodiisobutyronitrile | 6.7 parts |

The addition of Charge C occupied 3 hours. When this was complete, there was added in the same manner, over a period of 45 minutes, the following mixture:

*Charge D*

| | |
|---|---|
| Methyl methacrylate | 41 parts |
| Butyl acrylate | 35 parts |
| N-Butoxymethylacrylamide (60% solution in 3:1 butanol:xylene) | 8 parts |
| Methacrylic acid | 2.7 parts |
| Hydroxypropyl methacrylate | 4.4 parts |
| Azodiisobutyronitrile | 1.3 parts |

One half-hour after this final feed was complete, there was added *Charge E* consisting of a further 0.8 g of azodiisobutyronitrile (dissolved in about 10 g of the distillate returning from the reflux condenser). Heating was thereafter maintained at reflux temperature for a further 30 minutes, and alcohol was finally removed by distillation to give a stable latex of 51% solids content.

(2) *Preparation of Pigment Millbases*

A mixture of a silica/alumina-coated titanium dioxide (400 parts), a water-miscible hexa(methoxymethyl) melamine (50 parts), the condensate of 1 mol. of 1:4-bis(hydroxymethyl)-cyclohexane with 6 mols. of ethylene oxide (25 parts), a hydroxyalkylamide as indicated in the table below (25 parts), water (60 parts) and a copolymer of styrene, 2-ethylhexylacrylate, methacrylic acid and the methacrylate of methoxypolyethylene glycol mol.wt.500, in the weight proportions 21.3/15.4/4.1/59.2 (20 parts non-volatile) was ground in a ball mill with 1050 parts of $\frac{1}{4}$-inch steatite balls. After grinding for 24 hours, a fluid pigment dispersion was obtained having a particle size of less than 5 microns as measured by Hegman gauge. For comparison, there was similarly treated a mixture in which the amount of the ethylene oxide condensate was increased to 50 parts and the hydroxyalkylamide was omitted.

(3) *Preparation of Paint Composition*

With each of the millbases prepared as in (2) above (10 parts) there was blended sufficient of the latex described in (1) above to provide a composition containing 6.25 parts of latex polymer.

The paint compositions thus obtained were then each catalysed by the addition of 0.13 part of a 50% aqueous solution of p-toluenesulphonic acid and were applied by drawdown to pretreated aluminium panels using a wire-wound or grooved applicator bar providing a dry film thickness of 25 microns. The films were then stoved in a fan-assisted oven maintained at such a temperature that the metal was raised to 193—199°C within one minute. On reaching this temperature, the panels were withdrawn and quenched in cold water. The films were subjected to a series of standard mechanical tests, the results of which are shown in the table below.

| Hydroxy-alkyl-amide | Solvent resistance (no. of rubs with MEK) | T-bend test | Reverse impact (taped) inch/lb (Joules) | Pencil Hardness |
|---|---|---|---|---|
| A | >30 | 1T | 80 (9.04) | H |
| B | >30 | 1T | 100 (11.3) | H |
| C | >30 | 1½T | 60—80 (6.78—9.04) | H |
| D | >30 | 1½T | 40—60 (4.52—6.78) | 2H |
| E | >30 | 1½T | 40 (4.52) | H |

A = N,N,N′,N′-tetrakis(β-hydroxyethyl)adipamide.
B = N,N,N′,N′-tetrakis(β-hydroxyisopropyl)adipamide.
C = N,N,N′,N′-tetrakis(β-hydroxyisopropyl)terephthalamide.
D = N,N,N′,N′-tetrakis(β-hydroxyethyl)terephthalamide.
E = Hydroxyalkylamide replaced by equal weight of 1:4-bis(hydroxymethyl)cyclohexane/ethylene oxide condensate.
MEK = Methyl ethyl ketone

Example 2

Use of p-hydroxyalkylamides in primers for coil finishes.

(1) *Preparation of Polymer Latex*

To a 2-litre flask fitted with stirrer, thermometer, inert gas inlet and reflux condenser with provision for feeding ingredients into the returning distillate there was charged:

*Charge A*

| | |
|---|---|
| Distilled water | 315 g |
| Methanol | 500 g |
| Stabiliser precursor (as described below) | 19.5 g |

There was then added the following mixture:

*Charge B*

| | |
|---|---|
| Methyl methacrylate | 30 g |
| Styrene | 11 g |
| Butyl acrylate | 9 g |
| Bis-(4-tertbutylcyclohexyl)-peroxydicarbonate | 0.5 g |
| Azodiisobutyronitrile | 0.75 g |

The contents of the flask were then heated at reflux temperature (72°C) for 30 minutes to form a seed dispersion of polymer. There was then commenced the dropwise feed into the returning distillate of the following mixture:

*Charge C*

| | |
|---|---|
| Methyl methacrylate | 224 g |
| Styrene | 81.5 g |
| Butyl acrylate | 67.2 g |
| N-Butoxymethyl acrylamide (60% solution in 3:1 butanol/xylene) | 44 g |
| Methacrylic acid | 11 g |
| Stabiliser precursor (as described below) | 13 g |
| Bis-(4-tertbutylcyclohexyl)peroxy-dicarbonate | 2.1 g |
| Azodiisobutyronitrile | 5.2 g |

The addition of Charge C occupied 3 hours. When this was complete, there was added in the same manner, over a period of 45 minutes, the following mixture:

*Charge D*

| | |
|---|---|
| Methyl methacrylate | 48.6 g |
| Styrene | 17.6 g |
| Butyl acrylate | 14.6 g |
| N-Butoxymethylacrylamide (60% solution in 3:1 butanol/xylene) | 11 g |
| Methacrylic acid | 2.7 g |
| Bis-(4-tertbutylcyclohexyl)-peroxydicarbonate | 0.5 g |
| Azodiisobutyronitrile | 0.75 g |

One half-hour after this final feed was complete, there was added Charge E consisting of a further 0.4 g of bis-(4-tertbutylcyclohexane)peroxydicarbonate and 0.8 g of azodiisobutyronitrile (dissolved in about 10 g of the distillate returning from the reflux condenser). Heating was thereafter maintained at reflux temperature for a further 30 minutes, and solvent (195 g) was finally removed by distillation to give a stable latex of 49.5% solids content and viscosity 0.8 poise ($8 \times 10^{-2}$ Pa.s). The disperse polymer had the composition methyl methacrylate 55%, styrene 20%, butyl acrylate 16.5%, N-butoxymethylacrylamide 6% and methacrylic acid 2.5%; it had a Tg of 52°C. The disperse phase particles had an average size of 0.36 micron. The stabiliser precursor used in this preparation was the methacrylic acid ester of the monomethylether of polyethylene glcol, mol.wt. 2000, prepared by the action of methacrylyl chloride upon the hydroxy compound in the presence of a hydrogen chloride acceptor.

(2) *Preparation of Primer composition*

A mixture of 19.4 parts each of strontium chromate, china clay and titanium dioxide was dispersed by means of a ball mill in 42 parts of water, with the aid of 1 part of a conventional pigment dispersant. To 35.4 parts of the resulting millbase was added 64.2 parts of the acrylic latex described in part (1) above; to reduce gloss, this primer composition also incorporated 0.4 part of a coarse silicon.

To 18 parts of the primer composition there were added 0.5 part of a water-soluble melamine formaldehyde condensate ("Beetle" BE 370, ex. B.I.P. Ltd.) and 0.5 part of N,N,N',N'-tetrakis(β-hydroxyethyl)adipamide. The blend was catalysed by the addition of 0.01 part of p-toluenesulphonic acid and then applied to pretreated aluminium panels. The primer film was stoved to a peak metal temperature of 216—224°C; the dry film thickness was 5 microns.

A second primer blend was made as just described, but omitting the β-hydroxyalkylamide, and applied to aluminium panels in the same way.

Both sets of primer-coated panels were then coated with a pigmented water-borne acrylic topcoat, prepared essentially as described in Example 1, parts 1—3 above, for the case where the millbase does not contain any β-hydroxyalkylamide. Both sets of panels were subject to severe humidity conditions by placing them over a water bath maintained at 60°C. The panels on which there was used the primer containing no β-hydroxyalkylamide showed severe blistering within 48 hours. The panels on which there was used the primer containing β-hydroxyalkylamide remained free from blisters for 30 days.

Example 3

Modification of industrial water-borne stoving finishes.

A conventional industrial water-borne polyester stoving finish intended for spray application, consisting of 80% by weight of polyester and 20% of a melamine-formaldehyde condensate and having a pigment:binder ratio of 0.2:1, was modified by the presence of N,N,N',N'-tetrakis(β-hydroxyethyl)adipamide in the ratio of 30 parts of the amide to 100 parts of the finish. Films of this composition, and also of the unmodified finish, were spray applied at a thickness of 0.001 inch on to bare steel and zinc phosphated steel respectively and were then stoved for 30 minutes at 150°C. The resulting coatings were subjected to a series of standard tests, the results of which are shown in the following table.

| Test | Bare steel | | Zinc phosphated steel | |
|---|---|---|---|---|
| | Standard finish | Modified finish | Standard finish | Modified finish |
| Pencil hardness | 2H | 2H | | |
| 20° gloss | 49 | 50 | | |
| 60° gloss | 83 | 86 | | |
| Cross-hatch (adhesion) | Pass | Pass | | |
| $\frac{1}{4}$" (6.35 mm) bend | Pass | Pass | | |
| 1500 g scratch test | Pass | Pass | | |
| Reverse impact | Fail (30 inch/lb) (3.39 Joules) | Pass (30 inch/lb) (3.39 Joules) | | |
| Acetone resistance | Pass | Pass | | |
| Humidity resistance | Pass (3 days) | Pass (3 days) | Pass (6 days) | Pass (8 days) |
| Salt spray resistance | Fail (1 day) | Fail (1 day) | Pass (1 day) | Pass (6 days) |
| Water soak | Pass (10 days) | Pass (10 days) | Pass (10 days) | Pass (10 days) |
| Application viscosity | 58 secs BS/B4 | 56 secs BS/B4 | | |
| Application solids | 29.4% | 34.6% | | |

A repetition of the above procedures and tests, but using N,N,N',N'-tetrakis(β-hydroxyisopropyl)adipamide in place of the β-hydroxyethyl homologue, gave similar results.

Example 4

Two white water-borne industrial finishes suitable for spray application were prepared, having pigment: binder ratios of 1:1 in each case. The binder compositions employed were (a) a blend of a conventional polyester with N,N,N',N'-tetrakis(β-hydroxyethyl)adipamide in the ratio 80:20, and (b) a

blend of a conventional polyester, a conventional water-soluble melamine-formaldehyde condensate and N,N,N',N'-tetrakis($\beta$-hydroxyethyl)adipamide in the ratios 80:30:20.

The finishes were applied by spray to panels of bare steel and to zinc phosphated steel respectively so as to give a film thickness of 0.001 inch. The film derived from binder (a) was stoved for 30 minutes at 150°C and that derived from binder (b) for 30 minutes at 170°C. The coated panels were aged for four days and then subjected to a series of tests with the results shown in the following table.

| Test | Bare steel | | Zinc Phosphated steel | |
|---|---|---|---|---|
| | Binder (a) | Binder (b) | Binder (a) | Binder (b) |
| Pencil hardness | B | 2H | | |
| 20° gloss | 58 | 35 | | |
| 60° gloss | 96 | 81 | | |
| Cross-hatch | Pass | Pass | | |
| ¼" (6.35 mm) bend | Pass | Fail | | |
| 2000 g scratch | Fail | Pass | | |
| Reverse impact | Pass (30 inch/lb) (3.39 Joules) | Pass (30 inch/lb) (3.39 Joules) | | |
| Acetone resistance | Fail | Pass | | |
| Humidity resistance | Pass (1 day) | Pass (1 day) | Pass (1 day) | Pass (3 days) |
| Saltspray resistance | Fail (1 day) | Fail (1 day) | Fail (1 day) | Pass (2 days) |
| Water soak | Pass (3 days) | Pass (10 days) | Pass (3 days) | Pass (10 days) |

## Claims

1. A thermosetting coating composition comprising:—

(A) a crosslinkable film-forming polymer;

(B) an aqueous medium in which the polymer is dissolved or stably dispersed;

(C) a hydroxyamido compound which is soluble in the aqueous medium and which has the general formula

(I) 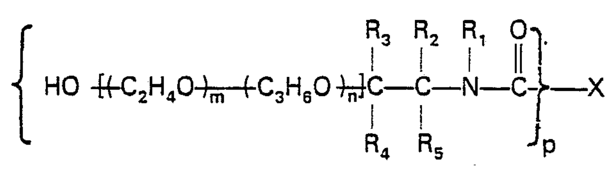

wherein,

m and n are independently zero or an integer from 1 to 10;

$R_1$ is H, a $C_1$—$C_5$ alkyl group or a $C_1$—$C_5$ hydroxyalkyl group;

$R_2$ and $R_3$ are either separately H or a $C_1$—$C_5$ alkyl group or together form part of a cycloalkylene or alkyl-substituted cycloalkylene group linking the hydroxyl group and the nitrogen atom;

$R_4$ and $R_5$ are each H or a $C_1$—$C_5$ alkyl group;

p is an integer from 1 to 4; and

X is hydrogen or a radical of valency p selected from saturated hydrocarbon chains containing from 1 to 10 carbon atoms, aromatic nuclei and radicals of the formula

$$-O-(C_2H_4O)_q-(C_3H_6O)_r-$$

in which q and r are independently zero or integers from 1 to 6, provided that q and r are not both zero and that (q + r) is not greater than 6, and further provided that, where p is 1, $R_1$ is a group of the formula

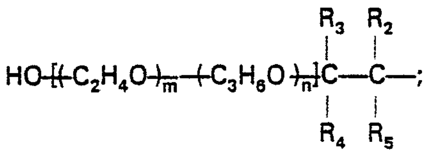

(D) an amino resin crosslinking agent for the film-forming polymer which is compatible with the constituents (A) and (C).

2. A composition as claimed in claim 1, wherein the film-forming polymer (A) is an acrylic polymer derived predominantly from one or more alkyl esters of acrylic acid or methacrylic acid.

3. A composition as claimed in claim 1, wherein the film-forming polymer (A) is a polyester or alkyd resin.

4. A composition as claimed in any one of claims 1 to 3, wherein the hydroxyamido compound has the general formula

$$(HOCH_2.CHR_2)_2-N.CO.Y.CO.N-(CHR_2.CH_2OH)_2 \quad \text{(II)}$$

where $R_2$ is hydrogen or methyl and Y is a divalent saturated hydrocarbon chain containing from 1 to 10 carbon atoms, or a benzene nucleus.

5. A composition as claimed in claim 4, wherein the hydroxyamido compound is selected from N,N,N',N'-tetrakis(β-hydroxyethyl)adipamide, N,N,N',N'-tetrakis(β-hydroxyisopropyl)adipamide, N,N,N',N'-tetrakis(β-hydroxyethyl)terephthalamide, N,N,N',N'-tetrakis(β-hydroxyisopropyl)terephthalamide, and N,N,N',N'-tetrakis(β-hydroxyethyl)azelamide.

6. A composition as claimed in claim 1, wherein the film-forming polymer (A) is a latex-type acrylic polymer and the hydroxyamido compound is present in an amount of from 1% to 20% based on the total weight of the polymer (A) and the crosslinking agent (D).

7. A composition as claimed in claim 1, wherein the film-forming polymer (A) is a water-soluble alkyd resin and the hydroxyamido compound is present in an amount of from 1% to 40% based on the total weight of the polymer (A) and the crosslinking agent (D).

8. A composition as claimed in any one of claims 1 to 7, wherein the proportion of amino resin crosslinking agent (D) used is from 5% to 40% based on the weight of the total film-forming material in the composition.

9. A composition as claimed in any one of claims 1 to 8, wherein there is also present, in an amount of from 5% to 40% based on the weight of the total film-forming material in the composition, a non-polymeric compound bearing functional groups which can react with the amino resin crosslinking agent.

**Revendications**

1. Composition de revêtement thermodurcissable qui comprend:

(A) un polymère filmogène réticulable;

(B) un milieu aqueux dans lequel le polymère est dissous ou dispersé de façon stable;

(C) un composé hydroxyamido qui est soluble dans le milieu aqueux et qui répond à la formule générale:

I 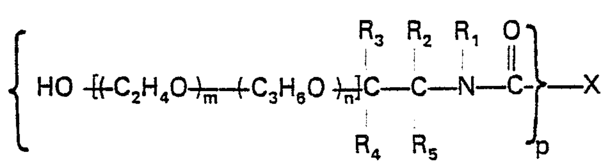

où

m et n sont indépendamment zéro ou un nombre entier de 1 à 10;

$R_1$ est un atome d'hydrogène ou un radical alcoyle en $C_1$—$C_5$ ou hydroxyalcoyle en $C_1$—$C_5$;

$R_2$ et $R_3$ sont soit séparément un atome d'hydrogène ou un radical alcoyle en $C_1$—$C_5$, soit font ensemble partie d'un radical cycloalcoylène ou cycloalcoylène alcoyl-substitué unissant le radical hydroxyle et l'atome d'azote;

$R_4$ et $R_5$ sont chacun un atome d'hydrogène ou un radical alcoyle en $C_1$—$C_5$;

p est un nombre entier de 1 à 4, et

X est un atome d'hydrogène ou un radical de valence p choisi entre les chaînes hydrocarbonées saturées contenant 1 à 10 atomes de carbone, les noyaux aromatiques et les radicaux de formule:

$$-O-(C_2H_4O)_q-(C_3H_6O)_r$$

où q et r sont indépendamment zéro ou des nombres entiers de 1 à 6, avec la restriction que q et r ne sont pas tous deux zéro et que (q + r) n'est pas supérieur à 6 et avec la restriction supplémentaire que lorsque p est 1, $R_1$ est un radical de formule:

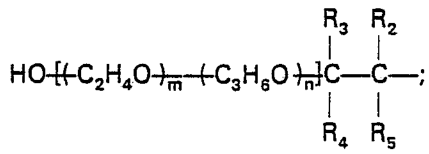

(D) une résine aminoplaste comme agent de réticulation pour le polymère filmogène qui est compatible avec les constituants (A) et (C).

2. Composition suivant la revendication 1, dans laquelle le polymère filmogène (A) est un polymère acrylique issu principalement d'un ou plusieurs esters alcoyliques d'acide acrylique ou d'acide méthacrylique.

3. Composition suivant la revendication 1, dans laquelle le polymère filmogène (A) est une résine polyester ou alkyde.

4. Composition suivant l'une quelconque des revendications 1 à 3, dans laquelle le composé hydroxyamido est de formulé générale:

(II) $$(HOCH_2 . CHR_2)_2-N.CO.Y.CO.N-(CHR_2 . CH_2 OH)_2$$

où $R_2$ est une atome d'hydrogène ou radical méthyle et Y est une chaîne hydrocarbonée saturée divalente comptant 1 à 10 atomes de carbone ou un noyau de benzène.

5. Composition suivant la revendication 4, dans laquelle le composé hydroxyamido est choisi entre le N,N,N',N'-tétrakis-(β-hydroxyéthyl)adipamide, le N,N,N',N'-tétrakis-(β-hydroxyisopropyl)adipamide, le N,N,N',N'-tétrakis-(β-hydroxyéthyl)téréphtalamide, le N,N,N',N'-tétrakis-(β-hydroxyisopropyl)téréphtalamide et le N,N,N',N'-tétrakis-(β-hydroxyéthyl)azélamide.

6. Composition suivant la revendication 1, dans laquelle le polymère filmogène (A) est un polymère acrylique de type latex et le composé hydroxyamido est présent en une quantité de 1 à 20% sur la base du poids total du polymère (A) et de l'agent de réticulation (D).

7. Composition suivant la revendication 1, dans laquelle le polymère filmogène (A) est un résine alkyde soluble dans l'eau et le composé hydroxyamido est présent en une quantité de 1 à 40% sur la base du poids total du polymère (A) et de l'agent de réticulation (D).

8. Composition suivant l'une quelconque des revendication 1 à 7, dans laquelle la proportion de résine aminoplaste comme agent de réticulation (D) utilisée est de 5 à 40% sur la base du poids de l'ensemble de la matière filmogène dans la composition.

9. Composition suivant l'une quelconque des revendications 1 à 8, qui contient également, en une quantité de 5 à 40% sur la base du poids de l'ensemble de la matière filmogène dans la composition, un composé non polymère portant des radicaux fonctionnels qui peuvent réagir avec la résine aminoplaste comme agent de réticulation.

**Patentansprüche**

1. Thermisch härtbare Beschichtungszusammensetzung, enthaltend

(A) ein vernetzbares filmbildendes Polymer;

(B) ein wäßriges Medium, in welchem das Polymer gelöst oder stabil dispergiert ist;

(C) eine Hydroxyamidoverbindung, die in dem wäßrigen Medium löslich ist und die allgemeine Formel

(I) 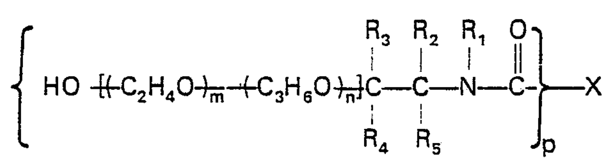

aufweist,

worin

m und n unabhängig voneinander für null oder eine Ganzzahl von 1 bis 10 stehen;

$R_1$ für H, eine $C_1$—$C_5$-Alkylgruppe oder eine $C_1$—$C_5$-Hydroxyalkylgruppe steht;

$R_2$ und $R_3$ entweder gesondert für H oder eine $C_1$—$C_5$-Alkylgruppe stehen oder gemeinsam Teil einer Cycloalkylen- oder alkylsubstituierten Cycloalkylengruppe bilden, welche die Hydroxylgruppe und das Stickstoffatom verbindet;

$R_4$ und $R_5$ jeweils für H oder eine $C_1$—$C_5$-Alkylgruppe stehen;

p für eine Ganzzahl von 1 bis 4 steht; und

X für Wasserstoff oder ein Radikal mit der Wertigkeit p steht, das ausgewählt ist aus gesättigten Kohlenwasserstoffketten mit 1 bis 10 Kohlenstoffatomen, aromatischen Kernen und Radikalen der Formel

$$-O-(C_2H_4O)_q-(C_3H_6O)_r-$$

wobei

q und r unabhängig voneinander null oder eine Ganzzahl von 1 bis 6 darstellen, mit der Maßgabe, daß q und r nicht beide null sind und daß (q + r) nicht größer als 6 ist, und mit der weiteren Maßgabe, daß, wenn p 1 darstellt, $R_1$ für eine Gruppe der Formel

$$HO-[-(C_2H_4O)_m-(C_3H_6O)_n-]\underset{R_4}{\overset{R_3}{C}}-\underset{R_5}{\overset{R_2}{C}}-;$$

steht;

(D) ein Aminoharzvernetzungsmittel für das filmbildende Polymer, welches mit den Bestandteilen (A) und (C) verträglich ist.

2. Zusammensetzung nach Anspruch 1, in welcher das filmbildende Polymer (A) ein Acrylpolymer ist, das sich überwiegend von ein oder mehreren Alkylestern von Acrylsäure oder Methacrylsäure ableitet.

3. Zusammensetzung nach Anspruch 1, in welcher das filmbildende Polymer (A) ein Polyester oder Alkydharz ist.

4. Zusammensetzung nach einem der Ansprüche 1 bis 3, in welcher die Hydroxyamidoverbindung die allgemeine Formel

$$(II) \qquad (HOCH_2.CHR_2)_2-N.CO.Y.CO.N-(CHR_2.CH_2OH)_2$$

aufweist, worin $R_2$ für Wasserstoff oder Methyl steht und Y für eine zweiwertige gesättigte Kohlenwasserstoffkette mit 1 bis 10 Kohlenstoffatomen oder einen Benzolkern steht.

5. Zusammensetzung nach Anspruch 4, in welcher die Hydroxyamidoverbindung ausgewählt ist aus N,N,N',N'-Tetrakis(β-hydroxyäthyl)adipamid, N,N,N',N'-Tetrakis(β-hydroxyisopropyl)adipamid, N,N,N',N'-Tetrakis(β-hydroxyäthyl)terephthalamid, N,N,N',N'-Tetrakis(β-hydroxyisopropyl)terephthalamid und N,N,N',N'-Tetrakis(β-hydroxyäthyl)azelamid.

6. Zusammensetzung nach Anspruch 1, in welcher das film-bildende Polymer (A) ein Acrylpolymer der Latextype ist und die Hydroxyamidoverbindung in einer Menge von 1 bis 20%, bezogen auf das Gesamtgewicht aus dem Polymer (A) und dem Vernetzungsmittel (D), anwesend ist.

7. Zusammensetzung nach Anspruch 1, in welcher das film-bildende Polymer (A) ein wasserlösliches Alkydharz ist und die Hydroxyamidoverbindung in einer Menge von 1 bis 40%, bezogen auf das Gesamtgewicht aus dem Polymer (A) und dem Vernetzungsmittel (D), anwesend ist.

8. Zusammensetzung nach einem der Ansprüche 1 bis 7, in welcher der Anteil des Aminoharzvernetzungsmittels (D) 5 bis 40%, bezogen auf das Gewicht des gesamten film-bildenden Materials in der Zusammensetzung, beträgt.

9. Zusammensetzung nach einem der Ansprüche 1 bis 8, in welcher außerdem in einer Menge von 5 bis 40%, bezogen auf das Gewicht des gesamten filmbildenden Materials in der Zusammensetzung, eine nichtpolymere Verbindung anwesend ist, die funktionelle Gruppen trägt, die mit dem Aminoharzvernetzungsmittel reagieren können.